# FASCICULE DE BREVET EUROPEEN

(11) **EP 1 192 236 B1**
(45) Date de publication et mention de la délivrance du brevet: **02.04.2003**
(21) Numéro de dépôt: 00946042.9
(22) Date de dépôt: 30.06.2000
(51) Int. Cl.: C10G 9/24, C10G 51/02

(54) **PROCEDE ET DISPOSITIF DE VAPOCRAQUAGE D'HYDROCARBURES**
VERFAHREN UND EINRICHTUNG ZUM DAMPFKRACKEN VON KOHLENWASSERSTOFFEN
METHOD AND DEVICE FOR STEAM CRACKING OF HYDROCARBONS

(30) Priorité: 07.07.1999 FR 9909039
(43) Date de publication de la demande: 03.04.2002
(73) Titulaire: Naphtachimie SA, 95866 Cergy Pontoise Cedex (FR); BP Chemicals Limited, London EC2M 7BA (GB); BP LAVERA SNC, 95866 Cergy Pontoise Cedex (FR)
(72) Inventeur: BELLET, Serge, 13220 Chateau Neuf les Martigues (FR); PINON, Jean, 13100 Aix en Provence (FR)
(74) Mandataire: Domange, Maxime
(86) Numéro de dépôt international: FR0001852
(87) Numéro de publication internationale: WO01004236

(56) Documents cités:
- EP-A- 0 733 609
- EP-A- 0 806 467
- WO-A-92/11931
- US-A- 4 287 377
- US-A- 4 912 282
- PATENT ABSTRACTS OF JAPAN vol. 1998, no. 01, 30 janvier 1998 (1998-01-30) & JP 09 235564 A (JGC CORP), 9 septembre 1997 (1997-09-09) cité dans la demande

## Description

La présente invention se rapporte à un procédé de vapocraquage d'hydrocarbures pour fabriquer notamment des oléfines.

Il est connu qu'un procédé de vapocraquage consiste à faire passer dans au moins un tube de craquage, tel qu'un serpentin, placé dans un four, un mélange d'hydrocarbures et de vapeur d'eau. Portés à haute température, par exemple de 700 à 900°C, les hydrocarbures sont craqués pour donner notamment des oléfines et éventuellement des dioléfines et des alcanes légers tels que le méthane. On comprend aisément qu'il n'est pas possible de porter instantanément les hydrocarbures à craquer à la température de réaction désirée et que celle-ci évolue progressivement le long du tube de craquage selon un profil plus ou moins rapide, à travers notamment des zones de préchauffage.

Un four de vapocraquage utilise habituellement comme source calorifique la chaleur rayonnante délivrée par des brûleurs, tels que des brûleurs conventionnels à gaz ou à huile. Les brûleurs sont souvent disposés sur le plancher et/ou sur les murs du four, et délimitent une zone de haute température dans le four, encore appelée zone de radiation du four. Immédiatement au-dessus de cette zone, se trouve une zone de convection par où s'échappent les gaz chauds de combustion de la zone de radiation, et qui généralement sert à préchauffer le mélange d'hydrocarbures à craquer, encore appelé la charge à craquer. Ainsi, le mélange est habituellement préchauffé jusqu'à environ 500°C dans la zone de convection d'un four, puis entre dans la zone de radiation du four où elle atteint la température de réaction, notamment entre 700 et 900°C.

Un tel procédé consiste donc à opérer l'intégralité du programme thermique depuis la phase de préchauffage jusqu'à celle du craquage proprement dit dans un seul et même four de chauffage, utilisant comme source calorifique la chaleur rayonnante de brûleurs. Le four qui doit être capable de résister aux températures les plus élevées mises en jeu par le procédé, suppose aussi être un appareil de grande dimension, avec tous les inconvénients évidents liés à la taille.

Le procédé de vapocraquage réclame aussi un contrôle précis du chauffage dans la zone réactionnelle, c'est-à-dire la zone de haute température. Avec les fours exploitant comme source calorifique la chaleur rayonnante délivrée par des brûleurs, le contrôle de la température ne peut être qu'indirect et donc imprécis, dans la mesure où l'intégralité de l'espace intérieur du four est chauffée par cette chaleur rayonnante.

Le brevet américain US 4,912,282 décrit un procédé et un dispositif de vapocraquage d'hydrocarbures destinés à fabriquer des oléfines, telles que l'éthylène. Le dispositif comprend un four de craquage chauffé en brûlant un combustible à l'aide d'un comburant comprenant un mélange d'air et de gaz d'échappement d'une turbine à gaz faisant partie d'un dispositif de cogénération. La turbine à gaz est accouplée à un générateur électrique dont le courant produit sert à alimenter électriquement des compresseurs et des pompes . L'air de combustion ainsi préchauffé dans ce procédé permet d'accroître la température de combustion et l'efficacité de la zone de radiation (dite de haute température) du four de craquage et par conséquent de réduire la consommation en combustible. Cependant le contrôle de la température dans la zone de radiation du four de craquage reste imprécise, et la taille du four très grande. Par ailleurs, les nuisances dans l'environnement dues aux rejets atmosphériques d'oxydes d'azote avec les gaz de combustion du four de craquage restent élevées.

La demande de brevet européen EP 0 806 467 décrit un procédé de pyrolyse d'hydrocarbures réalisé conjointement avec un procédé de décokage en continu, dans le but notamment de réduire ou de supprimer toutes les pertes de temps liées habituellement à des arrêts pour décokage. Le procédé de pyrolyse comprend une étape préalable de vapocraquage dans un four de vapocraquage, suivie de l'étape de pyrolyse proprement dite réalisée dans un réacteur de pyrolyse à très haute température et destinée à fabriquer des hydrocarbures acétyléniques, tels que l'acétylène. Il est précisé que le four de vapocraquage est habituellement chauffé par des brûleurs à gaz conventionnels, par exemple de type brûleurs radiants, et que le réacteur de pyrolyse peut être chauffé soit par des résistances électriques, soit par des gaines contenant un brûleur à gaz. Il n'est ni décrit, ni suggéré que les résistances électriques soient alimentées électriquement par un dispositif de cogénération. Par ailleurs, il est mentionné qu'un chauffage électrique est fortement déconseillé pour un tel réacteur, en raison des coûts élevés en investissement et en fonctionnement.

La demande de brevet japonais JP 09 235 564 propose un procédé de craquage thermique d'hydrocarbures destiné à fabriquer de l'éthylène. Dans le procédé, la charge est préchauffée au moyen de la chaleur de combustion d'un four de préchauffage muni de brûleurs conventionnels, puis est soumise à un craquage thermique dans une zone de haute température grâce à un chauffage par induction. Cependant, le courant électrique nécessaire au chauffage par induction ne provient pas d'un dispositif de cogénération. En outre, le four de préchauffage est muni de brûleurs conventionnels, avec tous les inconvénients cités précédemment pour ce type de chauffage et liés notamment aux problèmes de l'environnement tels que des rejets atmosphériques d'oxydes d'azote avec les gaz de combustion d'un tel four.

La présente invention concerne un procédé de vapocraquage d'hydrocarbures qui permet d'éviter ou de réduire très notablement les inconvénients cités ci-dessus. En particulier, l'invention porte sur un procédé de vapocraquage d'hydrocarbures consistant à chauffer un mélange d'hydrocarbures et de vapeur d'eau à une température désirée et suffisamment élevée pour craquer les hydrocarbures et les transformer en oléfines, procédé caractérisé en ce que la source énergétique nécessaire au chauffage du mélange est fournie essentiellement par une cogénération produisant par combustion à partir d'un combustible simultanément de l'énergie thermique et de l'énergie mécanique transformée en électricité par un alternateur ou un générateur électrique, et en ce que le mélange est d'abord soumis à un préchauffage grâce à l'énergie thermique fournie par la cogénération, et est ensuite chauffé à la température désirée de craquage au moyen d'un chauffage électrique à l'aide de l'électricité fournie par la cogénération.

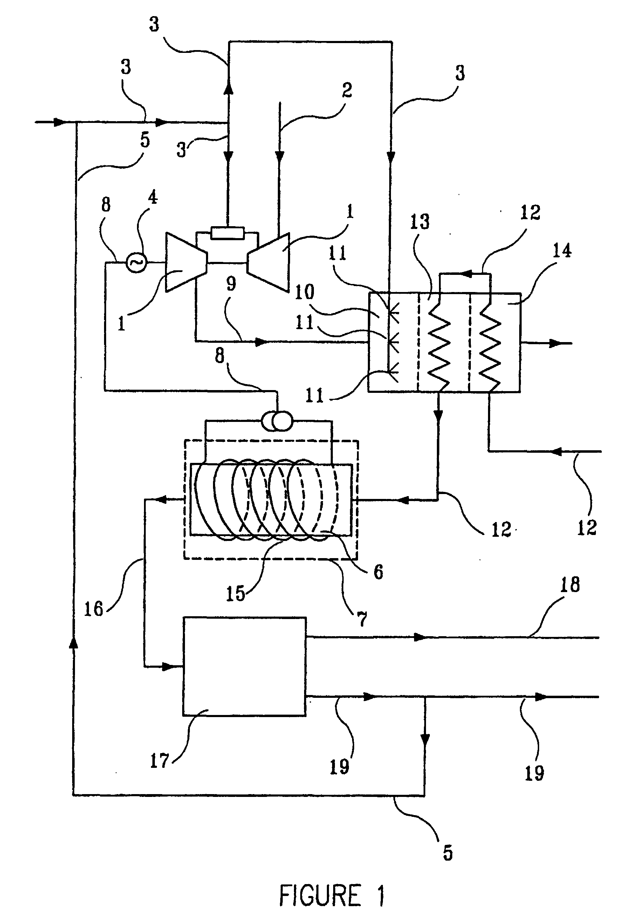

La Figure 1 représente schématiquement un dispositif pour mettre en oeuvre le procédé de la présente invention.

Le procédé de vapocraquage de la présente invention est particulièrement avantageux, lorsque la cogénération met en oeuvre un combustible choisi parmi l'un au moins des hydrocarbures craqués (issus du craquage), en particulier un ou plusieurs alcanes gazeux par exemple de C₁ à C₄, de préférence le méthane. Le combustible est dans ce cas de préférence un combustible hydrocarboné gazeux.

La cogénération permet, par combustion à partir d'un combustible de préférence gazeux, de produire simultanément de la chaleur et de l'énergie mécanique. L'énergie mécanique, produite par exemple par un moteur thermique ou un moteur à gaz, ou de préférence par une turbine à gaz, est utilisée généralement pour entraîner au moins un alternateur produisant de l'électricité. En récupérant l'énergie thermique perdue d'ordinaire lors de la production d'énergie mécanique, la cogénération fournit ainsi chaleur et énergie mécanique qui peuvent être réutilisées d'une façon appropriée et avantageuse.

La cogénération ainsi mise en oeuvre dans la présente invention permet avantageusement une maîtrise et une gestion de la production d'électricité d'une façon autonome et adaptée aux besoins spécifiques du chauffage électrique, en choisissant par exemple la puissance et/ou la fréquence du courant électrique appropriée(s) pour atteindre les hautes températures de craquage désirées. En outre, la cogénération utilisant de préférence un combustible gazeux, tel que le gaz naturel ou de préférence un ou plusieurs hydrocarbures issus du craquage, par exemple des alcanes de C₁ à C₄, en particulier le méthane, a l'avantage d'apporter non seulement une économie d'énergie substantielle, mais aussi une solution aux préoccupations de lutte contre la pollution atmosphérique, notamment en minimisant les rejets atmosphériques d'oxydes d'azote avec les gaz de combustion.

Le procédé de la présente invention présente un énorme potentiel lié au contrôle précis du profil de température dans la zone de chauffage électrique où les hydrocarbures sont craqués. Il permet une plus grande flexibilité sur le choix du profil de température permettant d'optimiser le craquage des hydrocarbures.

Le procédé de la présente invention présente avantageusement une simplification de mise en oeuvre beaucoup plus grande que celle des anciens procédés de vapocraquage connus jusqu'alors. Il a aussi l'énorme avantage d'être viable économiquement.

Une cogénération notamment par turbine à gaz comprend généralement (a) une compression d'air frais ou comburant (contenant de l'oxygène) jusqu'à une pression absolue par exemple de 1,5 à 2,5 MPa (mégapascal), selon la puissance électrique désirée, ensuite (b) l'introduction de l'air ou du comburant ainsi comprimé en mélange avec le combustible, de préférence gazeux, dans une chambre de combustion pour réaliser une combustion, puis (c), après combustion, une détente des gaz chauds de combustion dans une turbine couplée généralement à au moins un générateur ou alternateur produisant un courant électrique, et (d) une récupération des gaz chauds de combustion comme source calorifique. Une partie de l'énergie mécanique produite peut être utilisée pour comprimer initialement l'air ou le comburant, par exemple en entraînant un turbocompresseur d'air.

Dans le procédé de la présente invention, la température des gaz chauds de combustion émis par la cogénération (après détente) peut aller de 400 à 570°C, de préférence de 470 à 550°C. Cette énergie thermique est utilisée, de préférence, directement dans le préchauffage du mélange à craquer. Ainsi les gaz chauds de combustion échangent leur chaleur avec le mélange à craquer qui peut par exemple s'écouler à contre-courant desdits gaz chauds en traversant une ou plusieurs zones de préchauffage et s'échauffer par exemple jusqu'à une température de 500°C environ.

Les gaz chauds de combustion sortant de la cogénération peuvent être relativement riches en oxygène, et contenir par exemple de 10 à 18%, de préférence de 12 à 17% en volume d'oxygène. Il est possible d'utiliser une partie de cet oxygène comme comburant, et de réaliser ainsi une post-combustion et accroître l'énergie thermique utilisée pour le préchauffage du mélange à craquer. En pratique, on peut réaliser une post-combustion directement à la sortie de la cogénération et avant le préchauffage du mélange à craquer. Dans ce cas, les gaz chauds de combustion sortant de la cogénération sont introduits dans une chambre de post-combustion, et un combustible différent ou de préférence identique à celui utilisé dans la cogénération est ajouté et mis en contact avec ces gaz chauds. Le combustible utilisé dans la post-combustion est de préférence un ou plusieurs hydrocarbures issus du craquage, par exemple des alcanes de C₁ à C₄, en particulier le méthane. Par simple mise en contact avec les gaz chauds de combustion de la cogénération, le combustible ajouté brûle dans la chambre de post-combustion. Ainsi la post-combustion émet des gaz d'échappement extrêmement chauds et produit l'accroissement d'énergie thermique souhaité.

La température atteinte par les gaz d'échappement de la post-combustion peut aller de 500 à 1100°C, de préférence de 550 à 800°C, par exemple à 700°C. Ces gaz peuvent alors être directement utilisés pour préchauffer le mélange à craquer. Dans ce cas, ils échangent leur chaleur avec le mélange à craquer qui s'écoule par exemple à contre-courant de ces gaz d'échappement en traversant successivement une ou plusieurs zones de préchauffage et de surchauffe. En outre, on peut éventuellement échanger la chaleur de ces gaz d'échappement simultanément avec de l'eau ou de la vapeur d'eau dans une ou plusieurs chaudières pour produire de l'eau chaude ou de la vapeur à basse ou moyenne pression (par exemple de 0,1 à 12 MPa) et accroître le rendement énergétique du procédé. La vapeur ainsi produite peut être utilisée sur place comme source d'énergie dans le procédé de vapocraquage et en particulier dans les étapes de séparation, de fractionnement et de purification des oléfines et alcanes légers produits.

Lors de la post-combustion, l'oxygène contenu dans les gaz chauds de la cogénération est en partie consommé, de sorte que la teneur en oxygène des gaz d'échappement de la post-combustion peut être égale à une valeur de 1 à 10%, de préférence de 1 à 5% en volume. La température des gaz d'échappement de la post-combustion après échange thermique avec le mélange à craquer est substantiellement diminuée et peut être égale à une valeur allant de 120 à 300°C, de préférence 150 à 250°C.

Le mélange d'hydrocarbures et de vapeur d'eau peut ainsi être préchauffé en traversant une ou plusieurs zones de préchauffage et éventuellement de surchauffe, essentiellement par convection dans des échangeurs thermiques avec les gaz chauds de combustion émis par la cogénération ou de préférence avec les gaz d'échappement d'une post-combustion telle que décrite précédemment. La température du mélange après préchauffage peut atteindre 400 à 600°C, de préférence 450 à 550°C.

On peut par exemple utiliser un dispositif de cogénération constitué par une turbine à gaz de type "Frame 9" ® de la société Général Electric pouvant produire une puissance électrique de 120 MW (mégawatt). La puissance thermique qui peut être produite en aval de ce dispositif, est de 130 MW, et peut être accrue jusqu'à 150 MW, si une post-combustion telle que décrite précédemment est mise en oeuvre. Dans ce cas, ce dispositif de cogénération est capable énergétiquement de faire fonctionner des fours de vapocraquage d'une capacité totale de 300 000 tonnes par an d'éthylène.

Le mélange préchauffé est ensuite chauffé à la température de craquage au moyen d'un chauffage électrique alimenté avec l'électricité fournie par la cogénération. L'un des avantages de la présente invention est de pouvoir adapter à volonté le courant électrique fourni in situ et sur place par la cogénération, et en particulier la puissance électrique et/ou la fréquence du courant électrique aux besoins spécifiques du chauffage électrique, et atteindre ainsi la température de craquage désirée en chaque point du ou des tubes de craquage, notamment selon un profil déterminé de croissance de température jusqu'à la température maximale de craquage désirée.

Le mode de chauffage électrique utilisé pour atteindre la température de craquage désirée peut être un chauffage par induction ou un chauffage par effet Joule, par exemple par tube à passage de courant.

Dans le cas d'un chauffage par induction, le mélange à craquer peut être chauffé dans un four de chauffage par induction. Ce dernier peut comprendre plusieurs tubes de chauffage par induction mutuellement raccordés en parallèle. Dans ces tubes circule le mélange préchauffé d'hydrocarbures et de vapeur d'eau qui est soumis à un craquage thermique susceptible de former des oléfines, et ceci dans une plage dite de haute température obtenue grâce à ce four par induction. Les tubes de chauffage par induction peuvent être isolés dans une enceinte fermée et étanche. Chaque tube de chauffage par induction peut comporter un tube (ou tube de craquage) dans lequel circule le mélange préchauffé d'hydrocarbures et de vapeur d'eau, et une bobine inductrice enroulée autour du tube. Un calorifuge peut être disposé entre le tube et la bobine, et un autre calorifuge disposé au-dessus de la bobine, comme couverture externe. La bobine peut être réalisée par un enroulement d'un fil de cuivre. Entre les extrémités de la bobine, peut être connecté un générateur ou alternateur, par exemple de haute fréquence, destiné à alimenter la bobine en courant électrique, par exemple de haute fréquence. Le générateur ou alternateur peut être celui faisant partie de la cogénération et qui fournit précisément le courant électrique nécessaire au chauffage par induction. Le générateur ou l'alternateur peut aussi être raccordé à un adaptateur de fréquence et de puissance délivrant un courant électrique susceptible de chauffer par induction le ou les tubes où on réalise la réaction de vapocraquage.

On préfère mettre en oeuvre un chauffage par induction de haute fréquence (HF), en particulier des fréquences allant de 3 à 30 MHz (mégahertz), par exemple des fréquences de 13 et 27 MHz. Le chauffage par induction ne se limite pas à l'induction HF: on peut aussi utiliser des fréquences intermédiaires allant de 1 kHz (kilohertz) à 3 MHz, par exemple 2000 Hz (hertz), ou une fréquence d'induction commerciale allant de 50 à 1000 Hz, par exemple 50 ou 60 Hz.

On peut par exemple utiliser le chauffage par induction et en particulier le dispositif de chauffage et les tubes de chauffage HF décrits dans la demande de brevet japonais JP 09 235 564.

Dans le cas d'un chauffage par effet Joule, le mélange à craquer peut être chauffé dans un ou plusieurs tubes à passage de courant, en appliquant une tension électrique aux extrémité desdits tubes transportant le mélange. Le dispositif de chauffage par tube à passage de courant comprend un ou plusieurs tubes dans lesquels circule le mélange d'hydrocarbures et de vapeur d'eau, lesdits tubes étant fabriqués à partir de matériaux conducteurs, par exemple un acier inoxydable, et lesdits tubes étant raccordés à un générateur de tension. Le ou les tubes remplissent ainsi simultanément les fonctions de transport, de résistance électrique et de surface d'échange de chaleur. La tension électrique appliquée au(x) tube(s) à passage de courant peut être générée par un transformateur basse tension ou très basse tension, alimenté par le générateur ou l'alternateur faisant partie de la cogénération.

On préfère mettre en oeuvre un chauffage par tube à passage de courant utilisant une tension inférieure à 50 V (volt), ce qui permet d'assurer la sécurité des personnes. Un modulateur de puissance peut avantageusement être utilisé pour contrôler la température du mélange d'hydrocarbures et de vapeur d'eau.

On peut aussi utiliser un tube vibrant à passage de courant. Dans ce cas, le tube à passage de courant est soumis à une vibration transversale, notamment à une fréquence proche d'une fréquence propre du tube. Ceci à l'avantage de réduire le dépôt de coke sur la paroi interne du tube à passage de courant, comme décrit dans le brevet européen EP 0 519 050.

On peut par exemple utiliser un tube à passage de courant tel que vendu par les sociétés Etirex (France), Parmilleux (France) ou Vulcanic (France).

On peut aussi utiliser un tube à passage de courant associé à un dispositif permettant en même temps un chauffage par induction.

Selon un mode préférentiel de la présente invention, on peut appliquer des ondes ultrasoniques au mélange d'hydrocarbures et de vapeur d'eau pendant le craquage, tel que cela est décrit dans le brevet américain US 3,819,740. On peut utiliser un générateur d'ondes ultrasoniques alimenté par l'électricité fournie par la cogénération. La fréquence des ondes ultrasoniques appliquées au mélange à craquer dans le dispositf de chauffage électrique peut être de 1 à 800 kHz, par exemple 10 ou 20 kHz. Il a été observé que l'application des ondes ultrasoniques pour le vapocraquage du mélange d'hydrocarbures permet d'éviter ou de réduire le cokage interne des tubes de craquage et par ailleurs d'améliorer la sélectivité de la réaction de vapocraquage.

Le mélange d'hydrocarbures et de vapeur d'eau est soumis à une température de craquage qui peut commencer généralement à une température d'entrée du dispositif de chauffage électrique allant de 400 à 700°C, de préférence de 450 à 660°C, et qui peut finir généralement à une température maximale de sortie dudit dispositif allant de 700 à 900°C, de préférence de 760 à 850°C. Entre l'entrée et la sortie du dispositif de chauffage électrique, la température de craquage peut augmenter le long des tubes de craquage selon un profil continu ou discontinu tel que décrit dans les brevets européens EP 0 252 355 et EP 0 252 356. Le temps de séjour moyen du mélange d'hydrocarbures et de vapeur d'eau entre l'entrée et la sortie du dispositif de chauffage électrique peut aller de 300 à 1800 millisecondes. Le volume réactionnel peut être constant ou variable tout au long des tubes de craquage entre l'entrée et la sortie du dispositif de chauffage électrique, comme décrit dans les deux brevets européens cités précédemment.

La présente invention se rapporte également à un dispositif de vapocraquage d'hydrocarbures comprenant :
i) un dispositif de cogénération comprenant une turbine à gaz (1) raccordée à une ligne de fourniture en air ou en comburant (2), à une ligne d'alimentation en combustible (3) et à au moins une ligne d'évacuation (9) des gaz chauds de combustion émis par la turbine à gaz (1), elle-même couplée à au moins un alternateur ou générateur électrique (4) branché à au moins une ligne électrique (8),
ii) au moins une chambre de préchauffage (14) d'un mélange d'hydrocarbures et de vapeur d'eau, raccordée à l'une au moins des lignes d'évacuation (9) des gaz chauds de combustion et traversée par au moins une ligne de transport et d'échange thermique (12) dudit mélange,
iii) au moins un dispositif de chauffage électrique d'au moins un tube de craquage (6) raccordé à l'une au moins des lignes de transport et d'échange thermique (12) sortant de la chambre (14) et à au moins une ligne de soutirage (16) des hydrocarbures craqués, ledit dispositif de chauffage éiectrique étant connecté à l'une au moins des lignes électriques (8), et
iv) au moins une zone de séparation et de purification (17) des hydrocarbures craqués, raccordée à l'une au moins des lignes de soutirage (16).

Selon un aspect de la présente invention, le dispositif de chauffage électrique comprend au moins un tube de chauffage par induction (6), par exemple avec une bobine inductrice (15) enroulée autour dudit tube et connectée à l'une au moins des lignes électriques (8).

Selon un autre aspect de la présente invention, le dispositif de chauffage électrique est un dispositif de chauffage par effet Joule, par exemple un chauffage par tube à passage de courant qui comprend par exemple un ou plusieurs tubes raccordés par leurs extrémités à au moins un transformateur qui est lui même connecté à l'une au moins des lignes électriques (8). Le dispositif de chauffage par tube à passage de courant peut être en particulier l'un de ceux décrit précédemment.

Selon un mode préférentiel, le dispositif de vapocraquage peut en outre comprendre au moins une chambre de post-combustion (10) disposée sur l'une au moins des lignes d'évacuation (9) des gaz de combustion de la turbine à gaz (1) et alimentée par une ligne d'alimentation en combustible, de préférence identique à celle (3) décrite précédemment dans l'alimentation de la turbine à gaz ou en dérivation de celle-ci. La ligne d'alimentation en combustible peut comprendre à son extrémité située dans la chambre de post-combustion (10) un ou plusieurs brûleurs (11).

La chambre de post-combustion (10) peut être directement reliée à l'une au moins des chambres de préchauffage (14) du mélange à craquer, de sorte qu'en particulier les gaz d'échappement de la chambre (10) pénètrent directement dans l'une au moins des chambres de préchauffage (14).

La chambre de post-combustion (10) peut aussi être indirectement reliée à l'une au moins des chambres de préchauffage (14) en étant d'abord reliée directement à au moins une chambre de surchauffe (13) du mélange à craquer, préchauffé en (14). Dans ce cas, la chambre de surchauffe (13) est traversée par l'une au moins des lignes de transport et d'échange thermique (12) sortant de l'une des chambres de préchauffage (14) à laquelle ladite chambre de surchauffe (13) est de préférence directement raccordée. Ainsi, les gaz d'échappement de la chambre de post-combustion (10) traversent d'abord l'une au moins des chambres de surchauffe (13), puis l'une au moins des chambres de préchauffage (14), de sorte que ces gaz peuvent échanger leur chaleur avec le mélange à craquer circulant à l'intérieur de l'une au moins des lignes de transport et d'échange (12).

Selon un autre mode préférentiel, le dispositif de vapocraquage qui comprend au moins une zone de séparation et de purification (17) des hydrocarbures craqués en (6), peut comprendre au moins une ligne de soutirage (19) d'au moins un hydrocarbure craqué, notamment d'au moins un hydrocarbure léger, tel qu'un alcane de C₁ à C₄, en particulier le méthane. De la ligne de soutirage (19) part, par exemple en dérivation, au moins une ligne de récupération (5) d'hydrocarbure(s) craqué(s) qui est raccordée à l'une au moins des lignes d'alimentation en combustible (3) de la turbine à gaz (1) et/ou éventuellement à une ligne d'alimentation en combustible de l'une au moins des chambres de post-combustion (10) décrites précédemment.

Dans le cas où le chauffage électrique est un chauffage par induction, l'alternateur ou le générateur électrique (4) peut être raccordé à un adaptateur de fréquence et de puissance délivrant un courant électrique susceptible de chauffer par induction le tube de craquage (6) où on réalise la réaction de vapocraquage. On peut aussi utiliser un alternateur de haute fréquence (HF), en particulier d'une fréquence telle que décrite précédemment pour le chauffage du four par induction.

Dans le cas où le chauffage électrique est un chauffage par tube à passage de courant, l'alternateur ou le générateur électrique (4) peut être raccordé à un transformateur basse tension ou très basse tension.

Le dispositif de vapocraquage peut aussi comprendre un réseau de récupération de vapeur basse ou moyenne pression (par exemple de 5 à 10 MPa) grâce à une ligne d'alimentation en eau traversant l'une au moins des chambres de préchauffage (14), de façon à préchauffer l'eau et à créer de la vapeur par échange thermique avec les gaz de combustion traversant la ou lesdites chambres. Ceci peut aussi se faire en récupérant de l'énergie thermique par échange de chaleur entre l'eau ainsi préchauffée précédémment et les hydrocarbures craqués sortant du dispositif de chauffage électrique par la ou les lignes de soutirage (16). On peut ensuite séparer l'eau de la vapeur et récupérer cette dernière dans une ligne de vapeur. La vapeur peut ensuite être chauffée et même surchauffée par échange thermique entre la vapeur et les gaz de combustion traversant l'une au moins des chambres de préchauffage (14), et de préférence entre la vapeur et les gaz d'échappement de l'une au moins des chambres de post-combustion (10) traversant l'une au moins des chambres de surchauffe (13). Dans ce cas, la ligne de vapeur traverse l'une au moins des chambres de préchauffage (14) et/ou de préférence de surchauffe (13), de façon à former de la vapeur basse ou moyenne pression.

A titre d'illustration, la Figure 1 représente schématiquement un dispositif pouvant être mis en oeuvre dans le procédé de la présente invention.

Le dispositif de cogénération comprend une turbine à gaz (1) couplée à un alternateur (4). La turbine à gaz est alimentée par une ligne de fourniture d'air ou de comburant (2) et par une ligne d'alimentation en combustible de préférence gazeux (3). La cogénération produit grâce à l'alternateur (4) un courant électrique par l'intermédiaire d'une ligne électrique (8). Les gaz chauds de combustion s'échappent de la turbine à gaz (1) par une ligne d'évacuation (9). Cette dernière alimente une chambre de post-combustion (10) comprenant des brûleurs (11) eux-mêmes alimentés par une ligne d'alimentation en combustible (3) dérivée de celle (3) alimentant en combustible la turbine à gaz (1). Les gaz chauds d'échappement de la chambre de post-combustion (10) vont traverser successivement une chambre de surchauffe (13) et une chambre de préchauffage (14) et échanger leur chaleur avec le mélange d'hydrocarbures et de vapeur d'eau circulant dans une ligne de transport et d'échange thermique (12) traversant successivement les chambres de préchauffage (14) et de surchauffe (13). La ligne de transport et d'échange thermique (12) vient alimenter plusieurs tubes de chauffage par induction (6) disposés en parallèle et dont un seul est représenté dans la Figure 1. Le tube de chauffage par induction comprend un tube de craquage dans lequel circule le mélange à craquer, et une bobine inductrice (15) alimentée par la ligne électrique (8) provenant de l'alternateur (4). Le tube de chauffage par induction se trouve être isolé dans une enceinte (7). Le mélange d'hydrocarbures craqués dans le tube (6) sort de ce dernier par une ligne de soutirage (16), et après une ou plusieurs trempes (non représentées dans la Figure 1) est soumis à des fractionnements, séparations et purifications dans une zone (17), notamment par compressions et distillations. De cette zone on isole d'une part des oléfines, telles que l'éthylène et le propylène par une ou plusieurs lignes de soutirage (18), et d'autre part des alcanes légers, par exemple de C₁ à C₄, de préférence le méthane, par au moins une ligne de soutirage (19). De cette dernière part une ligne de récupération (5) d'hydrocarbure(s) craqué(s) servant à alimenter en combustible la turbine à gaz (1) et/ou éventuellement la chambre de post-combustion (10) par l'intermédiaire de l'une des lignes d'alimentation (3).

Le combustible gazeux alimentant la turbine à gaz (1) par exemple par la ligne d'alimentation (3) est de préférence sous une pression absolue minimale de 1,5 à 2,0 MPa, par exemple sous une pression absolue allant de 1,5 à 5 MPa, de préférence de 2 à 4 MPa. Le combustible gazeux alimentant la chambre de post-combustion (10) par exemple par la ligne d'alimentation (3) peut être sous une pression inférieure à celle du combustible alimentant la turbine à gaz (1), par exemple une pression absolue de 0,2 à 1,0 MPa, de préférence de 0,2 à 0,6 MPa.

## Revendications

1. Procédé de vapocraquage d'hydrocarbures consistant à chauffer un mélange d'hydrocarbures et de vapeur d'eau à une température désirée et suffisamment élevée pour craquer les hydrocarbures et les transformer en oléfines, procédé **caractérisé en ce que** la source énergétique nécessaire au chauffage du mélange est fournie essentiellement par une cogénération produisant par combustion à partir d'un combustible simultanément de l'énergie thermique et de l'énergie mécanique transformée en électricité par un alternateur ou générateur électrique, et **en ce que** le mélange est d'abord soumis à un préchauffage grâce à l'énergie thermique fournie par la cogénération, et est ensuite chauffé à la température désirée de craquage au moyen d'un chauffage électrique à l'aide de l'électricité fournie par la cogénération.

2. Procédé selon la revendication 1, **caractérisé en ce que** la cogénération met en oeuvre un combustible choisi parmi l'un au moins des hydrocarbures craqués, de préférence un ou plusieurs alcanes de C₁ à C₄.

3. Procédé selon la revendications 1, **caractérisé en ce que** le combustible est un combustible hydrocarboné gazeux, de préférence comprenant un ou plusieurs alcanes gazeux.

4. Procédé selon l'une quelconque des revendications 1 à 3, **caractérisé en ce que** l'énergie mécanique est produite par un moteur thermique, ou un moteur à gaz, ou de préférence une turbine à gaz.

5. Procédé selon l'une quelconque des revendications 1 à 4, **caractérisé en ce que** la cogénération produit de l'énergie thermique sous forme de gaz chauds de combustion dont la température est de 400 à 570°C, de préférence de 470 à 550°C.

6. Procédé selon l'une quelconque des revendications 1 à 5, **caractérisé en ce que** la cogénération produit de l'énergie thermique sous forme de gaz chauds de combustion dont on utilise une partie de l'oxygène comme comburant pour réaliser une post-combustion et accroître l'énergie thermique utilisée pour le préchauffage du mélange à craquer.

7. Procédé selon la revendication 6, **caractérisé en ce que** la post-combustion fournit des gaz d'échappement ayant une température de 500 à 1100°C, de préférence de 550 à 800°C.

8. Procédé selon la revendication 7, **caractérisé en ce que** l'on échange la chaleur des gaz d'échappement simultanément avec de l'eau ou de la vapeur d'eau dans une ou plusieurs chaudières pour produire de la vapeur à basse ou moyenne pression.

9. Procédé selon l'une quelconque des revendications 1 à 8, **caractérisé en ce que** le mode de chauffage électrique est un chauffage par induction.

10. Procédé selon la revendication 9, **caractérisé en ce qu'**on met en oeuvre un chauffage par induction de haute fréquence (HF).

11. Procédé selon l'une quelconque des revendications de 1 à 8, **caractérisé en ce que** le mode de chauffage électrique est un chauffage par effet Joule.

12. Procédé selon la revendication 11, **caractérisé en ce que** le chauffage par effet Joule est réalisé à l'aide d'un tube à passage de courant dans lequel circule le mélange à craquer.

13. Procédé selon l'une quelconque des revendications 1 à 12, **caractérisé en ce qu'**on applique des ondes ultrasoniques au mélange d'hydrocarbures et de vapeur d'eau pendant le craquage.

14. Procédé selon la revendication 13, **caractérisé en ce qu'**on utilise un générateur d'ondes ultrasoniques alimenté par l'électricité fournie par la cogénération.

15. Dispositif de vapocraquage d'hydrocarbures comprenant :
i) un dispositif de cogénération comprenant une turbine à gaz (1) raccordée à une ligne de fourniture en air ou en comburant (2), à une ligne d'alimentation en combustible (3) et à au moins une ligne d'évacuation (9) des gaz chauds de combustion émis par la turbine à gaz (1), elle-même couplée à au moins un alternateur ou générateur électrique (4) branché à au moins une ligne électrique (8),
ii) au moins une chambre de préchauffage (14) d'un mélange d'hydrocarbures et de vapeur d'eau, raccordée à l'une au moins des lignes d'évacuation (9) des gaz chauds de combustion et traversée par au moins une ligne de transport et d'échange thermique (12) dudit mélange,
iii) au moins un dispositif de chauffage électrique d'au moins un tube de craquage (6) raccordé à l'une au moins des lignes de transport et d'échange thermique (12) sortant de la chambre (14) et à au moins une ligne de soutirage (16) des hydrocarbures craqués, ledit dispositif de chauffage électrique étant connecté à l'une au moins des lignes électriques (8), et
iv) au moins une zone de séparation et de purification (17) des hydrocarbures craqués, raccordée à l'une au moins des lignes de soutirage (16).

16. Dispositif selon la revendication 15, **caractérisé en ce que** le dispositif de chauffage électrique comprend au moins un tube de chauffage par induction.

17. Dispositif selon la revendication 15, **caractérisé en ce que** le dispositif de chauffage électrique est un dispositif de chauffage par effet Joule.

18. Dispositif selon la revendication 17, **caractérisé en ce que** le dispositif de chauffage par effet Joule comprend un ou plusieurs tubes à passage de courant dans lequel circule le mélange à craquer.

19. Dispositif selon l'une quelconque des revendications 15 à 18, **caractérisé en ce qu'**il comprend au moins une chambre de post-combustion (10) disposée sur l'une au moins des lignes d'évacuation (9) des gaz de combustion de la turbine à gaz (1) et alimentée par une ligne d'alimentation en combustible.

20. Dispositif selon l'une quelconque des revendications 15 à 19, **caractérisé en ce que** la zone de séparation et de purification (17) des hydrocarbures craqués comprend au moins une ligne de soutirage (19) d'au moins un hydrocarbure craqué, et **en ce que** de ladite ligne de soutirage (19) part au moins une ligne de récupération (5) d'au moins un hydrocarbure craqué, raccordée à l'une au moins des lignes d'alimentation en combustible (3) de la turbine à gaz (1).

21. Dispositif selon la revendication 19, **caractérisé en ce que** la zone de séparation et de purification (17) des hydrocarbures craqués comprend au moins une ligne de soutirage (19) d'au moins un hydrocarbure craqué, et **en ce que** de ladite ligne de soutirage (19) part au moins une ligne de récupération (5) d'au moins un hydrocarbure craqué, raccordée à la ligne d'alimentation de l'une au moins des chambres de post-combustion (10).

## Claims

1. A method of steam cracking hydrocarbons, which method consists in heating a mixture of hydrocarbons and steam to a desired temperature that is high enough to crack the hydrocarbons and transform them into olefins, the method being **characterized in that** the source of energy needed for heating the mixture is supplied essentially by cogeneration using combustion of a fuel to produce simultaneously both heat energy and mechanical work which is transformed into electricity by an alternator or an electricity generator, and **in that** the mixture is initially subjected to preheating using the heat energy supplied by the cogeneration, and is subsequently heated to the desired cracking temperature by means of electrical heating using the electricity supplied by the cogeneration.

2. A method according to claim 1, **characterized in that** the cogeneration uses a fuel selected from at least one of the cracked hydrocarbons, preferably one or more alkanes in the range C₁ to C₄.

3. A method according to claim 1, **characterized in that** the fuel is a gaseous hydrocarbon fuel, preferably comprising one or more gaseous alkanes.

4. A method according to any one of claims 1 to 3, **characterized in that** the mechanical work is produced by a heat engine, a gas engine, or preferably a gas turbine.

5. A method according to any one of claims 1 to 4, **characterized in that** the cogeneration produces heat energy in the form of hot combustion gases at a temperature lying in the range 400°C to 570°C, and preferably in the range 470°C to 550°C.

6. A method according to any one of claims 1 to 5, **characterized in that** the cogeneration produces the heat energy in the form of hot combustion gases, with a fraction of the oxygen thereof being used as oxidizer for performing post-combustion and increasing the heat energy used for preheating the mixture to be cracked.

7. A method according to claim 6, **characterized in that** the post-combustion provides exhaust gases having a temperature lying in the range 500°C to 1100°C, and preferably in the range 550°C to 800°C.

8. A method according to claim 7, **characterized in that** the heat of the exhaust gases is exchanged simultaneously with water or steam in one or more boilers to produce steam at low or medium pressure.

9. A method according to any one of claims 1 to 8, **characterized in that** electrical heating is performed by induction heating.

10. A method according to claim 9, **characterized in that** induction heating is performed at high frequency (HF).

11. A method according to any one of claims 1 to 8, **characterized in that** the electrical heating is performed by the Joule effect.

12. A method according to claim 11, **characterized in that** the Joule effect heating is performed using a resistance element tube in which the mixture for cracking flows.

13. A method according to any one of claims 1 to 12, **characterized in that** ultrasound waves are applied to the mixture of hydrocarbons and steam during cracking.

14. A method according to claim 13, **characterized in that** an ultrasound wave generator is used that is powered by electricity supplied by the cogeneration.

15. Hydrocarbon steam cracking apparatus comprising:
i) a cogenerator system comprising a gas turbine (1) connected to a line (2) for supplying it with air or oxidizer, to a line (3) for feeding it with fuel, and to at least one exhaust line (9) for exhausting hot combustion gases from the gas turbine (1), the turbine itself being coupled to at least one alternator or electricity generator (4) connected to at least one electrical line (8);
ii) at least one preheating chamber (14) for preheating a mixture of hydrocarbons and steam, the chamber being connected to at least one of the lines (9) for evacuating hot combustion gases and having at least one line (12) passing therethrough for transporting said mixture and enabling heat to be exchanged therewith;
iii) at least one electrical heater apparatus for heating at least one cracking tube (6) connected to at least one of the transport and heat exchange lines (12) leaving the chamber (14), and at least one drawing-off line (16) for drawing off cracked hydrocarbons, said electrical heater apparatus being connected to at least one of the electrical lines (8); and
iv) at least one zone (17) for separating and purifying the cracked hydrocarbons, said zone being connected to at least one of the drawing-off lines (16).

16. Apparatus according to claim 15, **characterized in that** the electrical heater apparatus comprises at least one induction heater tube.

17. Apparatus according to claim 15, **characterized in that** the electrical heater apparatus is apparatus for Joule effect heating.

18. Apparatus according to claim 17, **characterized in that** the Joule effect heater apparatus comprises one or more resistance element tubes in which the mixture for cracking flows.

19. Apparatus according to any one of claims 15 to 18, **characterized in that** it comprises at least one post-combustion chamber (10) placed on at least one of the lines (9) for evacuating combustion gases from the gas turbine (1) and fed by a fuel feed line.

20. Apparatus according to any one of claims 15 to 19, **characterized in that** the zone (17) for separating and purifying the cracked hydrocarbons comprises at least one drawing-off line (19) for drawing off at least one cracked hydrocarbon, and **in that** said drawing-off line (19) has at least one recovery line (5) running therefrom for recovering at least one cracked hydrocarbon and connected to at least one of the lines (3) for feeding fuel to the gas turbine (1).

21. Apparatus according to claim 19, **characterized in that** the cracked hydrocarbon separation and purification zone (17) comprises at least one drawing-off line (19) for drawing off at least one cracked hydrocarbon, and **in that** said at least one drawing-off line (19) has at least one recovery line (5) running therefrom for recovering at least one cracked hydrocarbon and connected to the line for feeding at least one of the post-combustion chambers (10).

## Patentansprüche

1. Verfahren zum Dampfcracken von Kohlenwasserstoffen, bestehend aus dem Erwärmen einer Mischung von Kohlenwasserstoffen und Wasserdampf auf eine erwünschte und ausreichend hohe Temperatur, um die Kohlenwasserstoffe zu cracken und in Olefine zu überführen, wobei das Verfahren **dadurch gekennzeichnet ist, dass** die zum Erwärmen der Mischung benötigte Energiequelle im wesentlichen durch eine Kraftwärmekopplung geliefert wird, die durch Verbrennen von einem Brennstoff gleichzeitig thermische Energie und mechanische Energie erzeugt, welche durch einen Wechselstromgenerator oder einen Generator in Elektrizität umgewandelt wird, und dass die Mischung zunächst mit Hilfe der thermischen Energie, die durch die Kraftwärmekopplung geliefert wird, vorgewärmt wird, und anschließend mittels einer elektrischen Erwärmung mit Hilfe der Elektrizität, die durch die Kraftwärmekopplung geliefert wird, auf die erwünschte Crack-Temperatur erwärmt wird.

2. Verfahren gemäß Anspruch 1, **dadurch gekennzeichnet, dass** die Kraftwärmekopplung einen Brennstoff einsetzt, der aus wenigstens einem der gecrackten Kohlenwasserstoffe ausgewählt ist, bevorzugt ein oder mehrere C₁- bis C₄-Alkane.

3. Verfahren gemäß Anspruch 1, **dadurch gekennzeichnet, dass** der Brennstoff ein gasförmiger kohlenwasserstoffartiger Brennstoff ist, der vorzugsweise ein oder mehr gasförmige Alkane umfasst.

4. Verfahren gemäß einem der Ansprüche 1 bis 3, **dadurch gekennzeichnet, dass** die mechanische Energie durch eine Wärmekraftmaschine oder einen Gasmotor, oder vorzugsweise einen Gasturbinenmotor erzeugt wird.

5. Verfahren gemäß einem der Ansprüche 1 bis 4, **dadurch gekennzeichnet, dass** die Kraftwärmekopplung die thermische Energie in Form von heißen Abgasen erzeugt, deren Temperatur bei 400 bis 570°C, bevorzugt bei 470 bis 550°C liegt.

6. Verfahren gemäß einem der Ansprüche 1 bis 5, **dadurch gekennzeichnet, dass** die Kraftwärmekopplung die thermische Energie in Form von heißen Abgasen erzeugt, von denen einen Teil des Sauerstoffs als Sauerstoffträger verwendet wird, um eine Nachverbrennung durchzuführen und um die thermische Energie zu vermehren, die für das Vorwärmen der Mischung zum Cracken verwendet wird.

7. Verfahren gemäß Anspruch 6, **dadurch gekennzeichnet, dass** die Nachverbrennung Abgase liefert, die eine Temperatur von 500 bis 1100°C aufweisen, bevorzugt 550 bis 800°C.

8. Verfahren gemäß Anspruch 7, **dadurch gekennzeichnet, dass** die Wärme der Abgase gleichzeitig mit Wasser oder Wasserdampf in einem oder mehreren Kesseln ausgetauscht wird, um Niederdruckdampf oder Mitteldruckdampf zu erzeugen.

9. Verfahren gemäß einem der Ansprüche 1 bis 8, **dadurch gekennzeichnet, dass** die Art der elektrischen Erwärmung eine Induktionserwärmung ist.

10. Verfahren gemäß Anspruch 9, **dadurch gekennzeichnet, dass** eine Hochfrequenzinduktionserwärmung (HF) eingesetzt wird.

11. Verfahren gemäß einem der Ansprüche 1 bis 8, **dadurch gekennzeichnet, dass** die Art der elektrischen Erwärmung eine Joule-Effekt-Erwärmung ist.

12. Verfahren gemäß Anspruch 11, **dadurch gekennzeichnet, dass** die Joule-Effekt-Erwärmung mit Hilfe einer Röhre mit Strömungsdurchlauf durchgeführt wird, in der die zu crackende Mischung zirkuliert.

13. Verfahren gemäß einem der Ansprüche 1 bis 12, **dadurch gekennzeichnet, dass** während des Crackens die Mischung von Kohlenwasserstoffen und Wasserdampf mit Ultraschallwellen behandelt wird.

14. Verfahren gemäß Anspruch 13, **dadurch gekennzeichnet, dass** ein Ultraschallwellengenerator verwendet wird, der durch Elektrizität versorgt wird, welche durch die Kraftwärmekopplung geliefert wird.

15. Vorrichtung zum Dampfcracken von Kohlenwasserstoffen, umfassend:
i) eine Vorrichtung zur Kraftwärmekopplung, umfassend einen Gasturbinenmotor (1), der an eine Zufuhrleitung für Luft- oder Sauerstoffträger (2), an eine Versorgungsleitung für Brennstoff (3) und an wenigstens eine Abführleitung (9) für heiße Abgase, die durch den Gasturbinenmotor (1) abgegeben werden, angeschlossen ist, der selbst an wenigstens einen Wechselstromgenerator oder einen Generator (4) gekoppelt ist, der an wenigstens eine elektrische Leitung (8) angeschlossen ist,
ii) wenigstens eine Kammer zum Vorwärmen (14) einer Mischung von Kohlenwasserstoffen und Wasserdampf, die an wenigstens eine der Abführleitungen (9) für heiße Abgase angeschlossen ist und die durch wenigstens eine Leitung zum Transport und Wärmeaustausch (12) der Mischung durchquert wird,
iii) wenigstens eine Vorrichtung zum elektrischen Erwärmen von wenigstens einem Crackrohr (6), das an wenigstens eine der Leitungen zum Transport und Wärmeaustausch (12), die aus der Kammer (14) treten, und an wenigstens eine Entnahmeleitung (16) der gecrackten Kohlenwasserstoffe angeschlossen ist, wobei die Vorrichtung zum elektrischen Erwärmen mit wenigstens einer der elektrischen Leitungen (8) verbunden ist, und
iv) wenigstens eine Auftrennungs- und Reinigungszone (17) der gecrackten Kohlenwasserstoffe, die an wenigstens eine der Entnahmeleitungen (16) angeschlossen ist.

16. Vorrichtung gemäß Anspruch 15, **dadurch gekennzeichnet, dass** die Vorrichtung zum elektrischen Erwärmen wenigstens eine Röhre zum Induktionserwärmen umfasst.

17. Vorrichtung gemäß Anspruch 15, **dadurch gekennzeichnet, dass** die Vorrichtung zum elektrischen Erwärmen eine Vorrichtung zum Joule-Effekt-Erwärmen ist.

18. Vorrichtung gemäß Anspruch 17, **dadurch gekennzeichnet, dass** die Vorrichtung zum Joule-Effekt-Erwärmen eine oder mehrere Röhren mit Strömungsdurchlauf umfasst, in der die zu crackende Mischung zirkuliert.

19. Vorrichtung gemäß einem der Ansprüche 15 bis 18, **dadurch gekennzeichnet, dass** sie wenigstens eine Kammer zum Nachverbrennen (10) umfasst, die auf wenigstens einer der Abführleitungen (9) der heißen Abgase des Gasturbinenmotors (1) angeordnet ist und die über eine Versorgungsleitung mit Brennstoff versorgt wird.

20. Vorrichtung gemäß einem der Ansprüche 15 bis 19, **dadurch gekennzeichnet, dass** die Auftrennungs- und Reinigungszone (17) der gecrackten Kohlenwasserstoffe wenigstens eine Entnahmeleitung (19) von wenigstens einem gecrackten Kohlenwasserstoff umfasst, und dass von der Entnahmeleitung (19) wenigstens eine Wiedergewinnungsleitung (5) von wenigstens einem gecrackten Kohlenwasserstoff abgeht, die an wenigstens eine der Versorgungsleitungen für Brennstoff (3) des Gasturbinenmotors (1) angeschlossen ist.

21. Vorrichtung gemäß Anspruch 19, **dadurch gekennzeichnet, dass** die Auftrennungs- und Reinigungszone (17) der gecrackten Kohlenwasserstoffe wenigstens eine Entnahmeleitung (19) von wenigstens einem gecrackten Kohlenwasserstoff umfasst, und dass von der Entnahmeleitung (19) wenigstens eine Wiedergewinnungsleitung (5) von wenigstens einem gecrackten Kohlenwasserstoff abgeht, die an die Versorgungsleitung von wenigstens einer der Kammern der Nachverbrennung (10) angeschlossen ist.
